# EUROPÄISCHE PATENTSCHRIFT

(11) **EP 1 547 006 B1**
(45) Veröffentlichungstag und Bekanntmachung des Hinweises auf die Patenterteilung: **11.07.2007**
(21) Anmeldenummer: 03798866.4
(22) Anmeldetag: 25.08.2003
(51) Int. Cl.: G06K 19/07

(54) **KONTAKTLOSER DATENTRÄGER**
CONTACTLESS DATA CARRIER
SUPPORT DE DONNEES SANS CONTACT

(30) Priorität: 01.10.2002 DE 10245747
(43) Veröffentlichungstag der Anmeldung: 29.06.2005
(73) Patentinhaber: Infineon Technologies AG, 81669 München (DE)
(72) Erfinder: BERGER, Dominik, 8046 Graz (AT)
(74) Vertreter: Epping - Hermann - Fischer
(86) Internationale Anmeldenummer: PCT/DE2003/002838
(87) Internationale Veröffentlichungsnummer: WO 2004/032040

(56) Entgegenhaltungen:
- EP-A- 1 134 693
- US-B1- 6 211 786

## Beschreibung

Die Erfindung betrifft einen kontaktlosen Datenträger mit einer Hauptschaltungskomponente, einem Koppelelement und einer steuerbaren Last, die der Hauptschaltungskomponente parallel geschaltet ist, wobei die Hauptschaltungskomponente eine Modulationssteuerung aufweist, durch die die steuerbare Last zur Lastmodulation verringerbar ist.

Außerdem betrifft die Erfindung ein Verfahren zum Betreiben eines kontaktlosen Datenträgers, bei dem einer Hauptschaltungskomponente eine steuerbare Last parallel geschaltet ist, und bei dem eine Rücksendung von Daten durch Entlastungsmodulation erfolgt.

Zum Senden von Daten von einem kontaktlosen Datenträger an ein Schreib-/Lesegerät ist es bekannt, die von dem kontaktlosen Datenträger aus dem von dem Schreib-/Lesegerät erzeugten elektromagnetischen Feld aufgenommene Energie zu variieren. Die Änderung der aufgenommenen Energie kann von dem Schreib-/Lesegerät detektiert und auf diese Weise durch entsprechende Modulation bzw. Demodulation übertragene Daten erkannt werden. Ein derzeit geltender Standard für solche kontaktlose Datenträger bzw. Chipkarten ist die ISO 14443 oder die ISO 15693. Die bekannten Datenträger arbeiten mit ohmscher oder kapazitiver Belastungsmodulation. Zur Modulation wird also die zur Hauptschaltungskomponente parallel geschaltete Last vergrößert, so daß die aufgenommene Leistung des kontaktlosen Datenträgers steigt.

Problematisch bei der Belastungsmodulation ist, daß bei der Belastung zur Modulation auch die Spannung, die zur Versorgung der Hauptschaltungskomponente zur Verfügung steht, absinkt. Dies kann zu Funktionsstörungen führen, beispielsweise dadurch, daß eine Unterspannungsdetektorschaltung anspricht oder aber die Takterkennung ausfällt, die ein mit dem elektromagnetischen Feld des Schreib-/Lesegeräts übermitteltes Taktsignal auswertet. Zwar besteht die Möglichkeit, den Energiehub, also die Höhe der Lastzuschaltung, gering zu halten, jedoch ist eine Mindestmodulationsamplitude erforderlich, damit das Schreib-/Lesegerät die Modulation erkennen kann. Insgesamt führt die Belastungsmodulation zu einer unerwünschten Reichweitenbegrenzung. Unter diesen Rahmenbedingungen erfolgt in der Regel eine kompromißbehaftete Dimensionierung der Belastungswiderstände.

Weiterhin ist auch eine nichtlineare Modulation bekannt, bei der die Modulationstiefe abnimmt, bevor die Versorgungsspannung die untere zulässige Spannungsschwelle erreicht. Aber auch bei dieser Ausführung eines kontaktlosen Datenträgers wird das Modulationssignal schwächer, so daß die Wahrscheinlichkeit fehlerhafter Datenübertragung zunimmt. Ein solches Problem wird Dokument US-A-6 211 726 erwähnt.

Zur Umgehung der genannten Probleme ist es auch bekannt, statt einer Belastungsmodulation eine Entlastungsmodulation vorzusehen. Ein kontaktloser Datenträger, der nach einem solchen Verfahren arbeitet, ist beispielsweise aus der EP 1 042 731 B1 bekannt. Bei der dort gezeigten Schaltung ist ein Shunt-Transistor vorgesehen, der zu- und wegschaltbar ist. Der Energiehub ist dabei von der im Shunt vernichteten Energie abhängig. In einem Normalbetriebszustand, wenn keine Daten gesendet werden sollen, ist der Shunt zugeschaltet und erhöht den Stromverbrauch des kontaktlosen Datenträgers. Zur Modulation wird der Shunt weggeschaltet, was zu einer Reduzierung des Stromverbrauchs führt, was wiederum von dem Schreib-/Lesegerät erkannt werden kann. Auf Seiten des Schreib-/Lesegerätes werden die Modulationssignale des kontaktlosen Datenträgers AC-mäßig eingekoppelt, so daß nur die spektrale Amplitude der Modulationsseitenbänder berücksichtigt wird. Es spielt daher keine Rolle, ob eine Belastungs- oder eine Entlastungsmodulation erfolgt, so daß auch nach dem Prinzip der Entlastungsmodulation arbeitende kontaktlose Datenträger mit den bestehenden Schreib-/Lesegeräten kompatibel sind. Wenn der Shunt weggeschaltet ist, um für den Lesebetrieb eine möglichst große Reichweite zu erzielen, ist der Shunt nicht aktiv und kann daher auch nicht entlastet werden. Ein Senden von Daten ist daher nicht mehr möglich. Die im Normalbetriebszustand zugeschaltete Last führt zudem zu einer unerwünschten Reichweitenbegrenzung.

Die Aufgabe der vorliegenden Erfindung ist es daher, einen kontaktlosen Datenträger anzugeben, bei dem ein unnötiges Vernichten von Energie vermieden und der Datenträger reichweitenoptimiert ausgestaltet werden kann. Ebenso ist Aufgabe der Erfindung, ein entsprechendes Verfahren anzugeben.

Erfindungsgemäß wird diese Aufgabe durch einen kontaktlosen Datenträger der eingangs genannten Art gelöst, der dadurch gekennzeichnet ist, daß eine Stromverbrauchssteuerung vorgesehen ist, durch die der Stromverbrauch der Hauptschaltungskomponente verringerbar und zur Herstellung eines gleichbleibenden Stromverbrauchs die Last vergrößerbar ist. Bezüglich des Verfahrens wird die Aufgabe durch ein Verfahren der eingangs genannten Art gelöst, das dadurch gekennzeichnet ist, daß in einem Normalbetriebszustand die steuerbare Last auf einem ersten niedrigen Wert eingestellt ist, vor einer Lastmodulation zum Senden von Daten der Stromverbrauch der Hauptschaltungskomponente reduziert und gleichzeitig die Last vergrößert wird zur Herstellung eines gleichbleibenden Stromverbrauchs, zur Lastmodulation zum Senden von Daten die steuerbare Last in Abhängigkeit der zu sendenden Daten verringert wird und nach dem Senden von Daten der Stromverbrauch der Hauptschaltungskomponente wieder erhöht und die Last auf den ersten Wert verringert wird.

Der Vorteil des erfindungsgemäßen Datenträgers bzw. des erfindungsgemäßen Verfahrens liegt darin, daß nicht ständig Energie vernichtet wird, was zu einer Reichweitenreduzierung führt. Statt dessen wird ausgenutzt, daß die Zeit, in der Daten gesendet werden, relativ kurz ist und insbesondere während des Sendebetriebs Stromsparmaßnahmen durchgeführt werden können, die für einen Energiehub zur Entlastungsmodulation zur Verfügung gestellt werden können. Da die Absenkung des Stromverbrauchs verhältnismäßig langsam ist im Vergleich zum Modulationssignal selbst wird die zunächst gewonnene Energie in der zugeschalteten bzw. erhöhten Last vernichtet und die Entlastungsmodulation erfolgt durch ein schnelles Entlasten, in dem die Last abgeschaltet oder verringert wird.

Vorteilhafte Maßnahmen zur Verringerung des Stromverbrauchs sind die Verringerung der Taktfrequenz oder das Abschalten zeitweise, insbesondere bei der Rücksendung von Daten nicht gebrauchter Module innerhalb der Hauptschaltungskomponente.

Weiterhin ist vorteilhaft, die Last durch die Modulationssteuerung soweit zu verringern, bis eine vorbestimmte, maximale zulässige Spannung an dem Koppelelement erreicht ist. Dadurch erhält man immer eine möglichst große Modulationsamplitude.

Die Erfindung wird nachfolgend anhand eines Ausführungsbeispieles näher erläutert. Es zeigt:
- Figur 1: eine erste Ausführungsform eines erfindungsgemäßen kontaktlosen Datenträgers,
- Figur 2: eine zweite Ausführungsform eines Datenträgers und
- Figur 3: ein Signaldiagramm zu den Schaltungen von Figur 1 und 2.

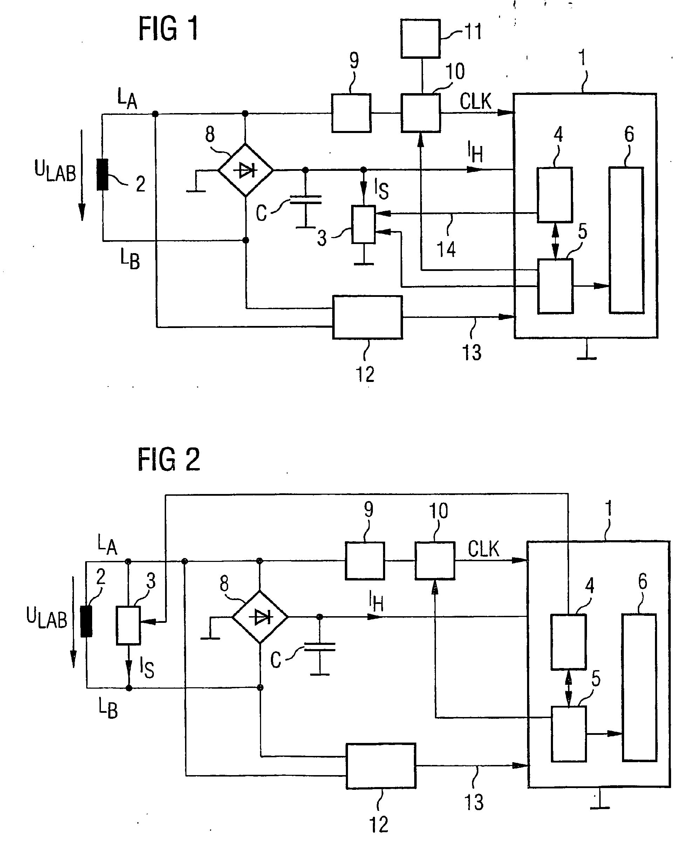

In Figur 1 ist ein erstes Ausführungsbeispiel eines erfindungsgemäßen kontaktlosen Datenträgers dargestellt. Der Datenträger besitzt ein Koppelelement 2 in Form einer Spule, in der ein elektromagnetisches Feld, das durch ein Schreib-/Lesegerät erzeugt wird, eine Spannung induziert. Über das elektromagnetische Feld werden neben Daten auch die Energie übertragen, die der kontaktlose Datenträger zu seinem Betrieb benötigt. An den Anschlüssen LA und LB des Koppelelementes 2 ist ein Demodulator 12 angeschlossen, der aus der in der Spule 2 induzierten Spannung die übertragenen Daten extrahiert und in Form eines Datensignals 13 einer Hauptschaltungskomponenten 1 zur Verfügung stellt. Ebenfalls mit den Anschlüssen LA und LB der Spule 2 ist ein Gleichrichter 8 verbunden, der aus der induzierten Wechselspannung eine Gleichspannung erzeugt, die zum Betrieb der Hauptschaltungskomponente und der anderen Schaltungskomponenten des Datenträgers benötigt wird. Ein Stützkondensator C sorgt für die Glättung der gleichgerichteten Wechselspannung. Die Hauptschaltungskomponente 1 beinhaltet solche Funktionseinheiten, die die Datenverarbeitung vornehmen und beispielsweise eine Modulationssteuerung 4. Zum Betrieb der Hauptschaltungskomponente 1 wird ein Strom I_{H} benötigt, der von der Gleichrichterschaltung 8 zugeführt wird.

Das elektromagnetische Feld überträgt darüber hinaus ein Taktsignal, das von einer Takterkennungsvorrichtung 9 ausgewertet wird, die dazu mit der Spule 2 verbunden ist. Die von der Takterkennungsvorrichtung 9 bereitgestellte Frequenz ist zu hoch, um von der Hauptschaltungskomponente 1 als Taktsignal verwendet werden zu können. Daher ist der Takterkennungsvorrichtung 9 ein Teiler 10 nachgeschaltet, der durch die Einstellung eines entsprechenden Taktverhältnisses ein geeignetes Taktsignal CLK erzeugt, das der Hauptschaltungskomponente 1 zugeführt wird. Um eine gleichbleibende, exakte Taktfrequenz zu erhalten, ist im Ausführungsbeispiel von Figur 1 der Teiler 10 mit einer Nachlaufsynchronisationsvorrichtung (Englisch: phase lock loop, PLL) verbunden.

Im Allgemeinen ist eine bidirektionale Kommunikation zwischen einem Schreib-/Lesegerät und dem kontaktlosen Datenträger erforderlich, es müssen also auch Daten in die entgegengesetzte Richtung übermittelt werden. Dies erfolgt in den der Erfindung zu Grunde liegenden Datenträgern über eine Lastmodulation, es wird also die Belastung, die das Schreib-/Lesegerät durch den kontaktlosen Datenträger sieht, verändert. Dazu ist eine steuerbare Last 3 vorgesehen, die in der Schaltung von Figur 1 am Ausgang des Gleichrichters 8 angeschlossen ist und direkt parallel zu der Hauptschaltungskomponente 1 liegt. Die steuerbare Last ist von der Modulationssteuerung 4 ansteuerbar. Zur Übertragung von Daten wird die Last 3 geändert, so daß der Strom I_{S}, der durch die Last 3 fließt, sich entsprechend der Modulationsvorgabe ändert. Der Strom durch die Spule 2, der sich durch die Ströme I_{S} und I_{H} durch die Last 3 und durch die Hauptschaltungskomponente 1 zusammensetzt, schwankt damit entsprechend der Modulation. Diese Lastschwankung ist von dem Schreib-/Lesegerät erkennbar. Bei der steuerbaren Last 3 handelt es sich im allgemeinen um einen Transistor, dem beispielsweise ein Widerstand oder eine Kapazität in Reihe geschaltet ist.

Bei einem kontaktlosen Datenträger, von dem die Erfindung ausgeht, erfolgt die Lastmodulation in Form einer Entlastungsmodulation. Wenn also ein Signal übertragen werden soll, wird die Last 3 verringert, so daß der Strom I_{S} absinkt, was das Schreib-/Lesegerät als Entlastung wahrnimmt. Um jedoch entlasten zu können, muß zunächst eine Belastung vorhanden sein. Während bei Schaltungen nach dem Stand der Technik dazu ein ständiger Strom durch die Last 3 fließt, durch den Leistung verbraucht wird, ist erfindungsgemäß vorgesehen, im Normalbetriebszustand, wenn also keine Daten gesendet werden, keinen Strom durch die Last 3 fließen zu lassen, das bedeutet, daß I_{S} gleich Null ist. Vor dem Senden von Daten muß jedoch der Strom I_{S} durch die Last 3 erhöht werden, damit die Möglichkeit zur schnellen Entlastung zur Datenübertragung besteht. Da jedoch nicht der gesamte Strom I_{S} + I_{H} erhöht werden soll, muß gleichzeitig mit der Steigerung von I_{S} der Strom I_{H} durch die Hauptschaltungskomponenten 1 verringert werden.

Dies wird durch eine Stromverbrauchssteuerung 5 erreicht. Diese ist dazu eingerichtet, den Stromverbrauch der Hauptschaltungskomponente zu reduzieren. Dies geschieht im Falle der Figur 1 dadurch, daß das Teilverhältnis des Teilers 10 beeinflußt wird, so daß die Taktfrequenz, mit der die Hauptschaltungskomponente arbeitet, reduziert wird. Dadurch sinkt automatisch der Stromverbrauch der Hauptschaltungskomponente 1. Eine andere Maßnahme zur Stromverbrauchsreduzierung besteht in dem Abschalten zeitweise nicht benötigter Komponenten 6. Beispielsweise sind Komponenten, die lediglich zum Empfangen von Daten vorgesehen sind, überflüssig, wenn es um das Senden von Daten geht. Durch das Abschalten solcher Stromverbraucher wird der Strom I_{H} weiter reduziert. Die Stromverbrauchssteuerung 5 steuert in entsprechender Weise die steuerbare Last 3 an, so daß die Summe des eingesparten Stromverbrauchs in der Hauptschaltungskomponente 1 dem erhöhten Strom durch die Last 3 entspricht. Der Gesamtstromverbrauch, also der Strom der durch die Spule 2 fließt, bleibt dadurch gleich.

Um nun Daten zu senden, wird die Belastung durch den Strom I_{S} durch die Last 3 kurzzeitig reduziert, so daß der Strom durch die Spule 2 sinkt und die Entlastung von dem Schreib-/Lesegerät als Datenübertragung erkannt werden kann. Der auf diese Weise erzeugte Energiehub ist wesentlich größer als der durch das reine Wegschalten eines Shunts, wie es bei Schaltungen nach dem Stand der Technik der Fall ist. Der zur Schaffung einer Entlastungsmöglichkeit vorgesehene unsinnige Verbrauch von Leistung in der Last 3 beschränkt sich erfindungsgemäß nur auf die Zeit, in der Daten gesendet werden sollen, während nach dem Stand der Technik ein ständiger sinnloser Verbrauch von Energie vorliegt.

In der Figur 2 ist ein zweites Ausführungsbeispiel eines erfindungsgemäßen kontaktlosen Datenträgers gezeigt. Im Ausführungsbeispiel von der Figur 2 wird auf eine Nachlaufsynchronisationsvorrichtung verzichtet. Der eigentliche Unterschied liegt aber darin, daß die steuerbare Last 3 nicht dem Gleichrichter 8 nachgeschaltet ist, sondern die Last 3 direkt mit den Anschlüssen der Spule 2 verbunden ist. Es liegt in diesem Fall also keine direkte Parallelschaltung der steuerbaren Last 3 und der Hauptschaltungskomponente 1 vor, sondern es ist die Gleichrichterschaltung noch dazwischen geschaltet. Gleichwohl ist der erzielte Effekt der gleiche. Der Strom durch die Spule 2 setzt sich auch in diesem Ausführungsbeispiel aus dem Strom I_{S} durch die Last 3 und dem Strom I_{H} durch die Hauptschaltungskomponente 1 zusammen. Der Stromverbrauch durch den Demodulator 12 und die Takterkennungsvorrichtung 9 ist dabei vernachlässigbar.

Ein weiterer Unterschied besteht in der Ansteuerung der steuerbaren Last 3. Während im Ausführungsbeispiel von Figur 1 sowohl eine Ansteuerung von der Modulationssteuerung 4 als auch von der Stromverbrauchssteuerung 5 erfolgte, ist im Ausführungsbeispiel von Figur 2 vorgesehen, daß die Stromverbrauchssteuerung 5 die Modulationssteuerung 4 ansteuert, die wiederum mit der steuerbaren Last 3 verbunden ist. Die Ansteuerung durch die Modulationssteuerung 4 erfolgt dabei in der Weise, daß sowohl die zu sendenden Daten als auch die Vorgabe von der Stromverbrauchssteuerung 5 zu einem gemeinsamen Steuersignal zusammengefaßt werden.

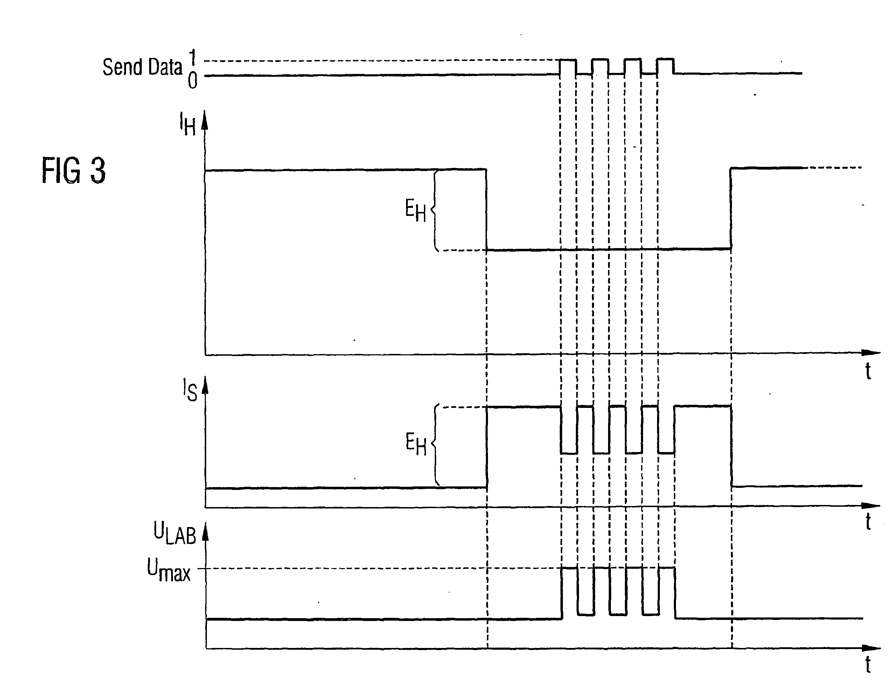

Der gesamte Ablauf ist besonders übersichtlich anhand des Signaldiagramms von Figur 3 darstellbar. Untereinander ist die logische Darstellung des zu sendenden Signals SEND DATA gezeigt, darunter der Strom I_{H} durch die Hauptschaltungskomponente 1, darunter der Strom I_{S} durch die steuerbare Last 3 und ganz unten in der Figur 3 die Spannung U_{LAB} über dem Koppelelement, also der Spule 2. Der Zeitpunkt, zu dem Daten gesendet werden sollen, ist in der Hauptschaltungskomponente 1 im Voraus bekannt. In ausreichend großem zeitlichen Abstand vor dem Senden der ersten Daten wird der Strom I_{H} durch die Hauptschaltungskomponente 1 um einen Betrag EH, den sogenannten Energiehub, abgesenkt. Gleichzeitig wird der Strom I_{S} durch die steuerbare Last 3 um den gleichen Betrag EH erhöht. An der Spule 2 ergibt sich dadurch keine Änderung, wie anhand der Spannung U_{LAB} zu erkennen ist.

Wenn nun eine logische 1 gesendet werden soll, wird die Last verringert und entsprechend der Strom I_{S} durch die Last 3 abgesenkt. Da der Strom I_{H} durch die Hauptschaltungskomponente 1 gleich bleibt, macht sich dies durch eine Stromänderung in der Spule 2 und damit auch in einer Änderung der Spannung U_{LAB} über den Anschlüssen LA und LB der Spule bemerkbar. Die Absenkung des Stroms I_{S} durch die Last 3 erfolgt dabei in dem Maß, wie eine Erhöhung der Spannung U_{LAB} zulässig ist, d. h. ein Wert Uₘₐₓ darf nicht überschritten werden. Indem, wie in einer vorteilhaften Ausführung vorgesehen ist, immer eine möglichst starke Entlastung vorgesehen ist, ist die Modulationsamplitude so groß wie möglich und Fehler bei der Datenübertragung werden vermieden. Gleichzeitig ist immer eine reichweitenoptimierte Betriebsweise gewährleistet.

Nach dem Zeitabschnitt, in dem das Senden der Daten erfolgt, werden durch die Stromverbrauchssteuerung 5 die abgeschalteten Funktionseinheiten wieder zugeschaltet, sowie die Taktfrequenz CLK erhöht. Gleichzeitig wird der Strom I_{S} durch die steuerbare Last 3 reduziert, so daß im Folgenden der Normalbetriebszustand wieder hergestellt ist. Zum Empfangen und Verarbeiten von Daten stehen nun wieder sämtliche Funktionseinheiten bei maximaler Verarbeitungsgeschwindigkeit zur Verfügung.

### Bezugszeichenliste

- 1: Hauptschaltungskomponente
- 2: Koppelelement
- 3: steuerbare Last
- 4: Modulationssteuerung
- 5: Stromverbrauchssteuerung
- 6: Funktionseinheiten
- 8: Gleichrichter
- 9: Takterkennungsvorrichtung
- 10: Teiler
- 11: Nachlaufsynchronisationsvorrichtung
- 12: Demodulator
- 13: Datensignal
- 14: Datensignal
- LA, LB: Spulenanschlüsse
- IS: Strom durch die Last 3
- I_{H}: Strom durch die Hauptschaltungskomponenten 1
- U_{LAB}: Spannung über dem Koppelelement 2

## Patentansprüche

1. Kontaktloser Datenträger mit
- einer Hauptschaltungskomponente (1),
- einem Koppelelement (2) und
- einer steuerbaren Last (3), die der Hauptschaltungskomponente (1) parallel geschaltet ist,
- wobei die Hauptschaltungskomponente (1) eine Modulationssteuerung (4) aufweist, durch die die steuerbare Last (3) zur Lastmodulation verringerbar ist,
**dadurch gekennzeichnet, daß**
eine Stromverbrauchssteuerung (5) vorgesehen ist, durch die der Stromverbrauch der Hauptschaltungskomponente (1) verringerbar und zur Herstellung eines gleichbleibenden Gesamtstromverbrauchs die steuerbare Last (3) vergrößerbar ist.

2. Kontaktloser Datenträger nach Anspruch 1,
**dadurch gekennzeichnet, daß**
der Stromverbrauch der Hauptschaltungskomponente (1) für eine Verringerung der Taktfrequenz verringerbar ist.

3. Kontaktloser Datenträger nach Anspruch 1 oder 2,
**dadurch gekennzeichnet, daß**
die Verringerung des Stromverbrauchs der Hauptschaltungskomponente (1) durch Abschaltung zeitweise, insbesondere bei der Rücksendung von Daten nicht gebrauchter Funktionseinheiten erfolgt.

4. Kontaktloser Datenträger nach einem der Ansprüche 1 bis 3,
**dadurch gekennzeichnet, daß**
eine Verringerung der Last (3) durch die Modulationssteuerung (4) soweit erfolgt, bis eine vorbestimmte maximale zulässige Spannung an dem Koppelelement (2) erreicht ist.

5. Datenträger nach einem der Ansprüche 1 bis 4,
**dadurch gekennzeichnet, daß**
die steuerbare Last (3) mit den Anschlüssen (LA, LB) des Koppelelementes (2) verbunden ist.

6. Kontaktloser Datenträger nach einem der Ansprüche 1 bis 4,
**dadurch gekennzeichnet, daß**
die steuerbare Last an Gleichspannungsausgängen eines Gleichrichters (8) angeschlossen ist.

7. Kontaktloser Datenträger nach einem der Ansprüche 1 bis 6,
**dadurch gekennzeichnet, daß**
eine Takterkennungsvorrichtung (9) mit einem nachgeschalteten Teiler (10) zur Bereitstellung einer Taktfrequenz für die Hauptschaltungskomponente (1) vorgesehen ist, wobei mit dem Teiler (10) eine Nachlaufsynchronisationsvorrichtung (11) verbunden ist zur Justierung der Taktfrequenz.

8. Verfahren zum Betrieb eines kontaktlosen Datenträgers, bei dem einer Hauptschaltungskomponente (1) eine steuerbare Last (3) parallel geschaltet ist und bei dem eine Rücksendung von Daten durch Entlastungsmodulation erfolgt,
**dadurch gekennzeichnet, daß**
- in einem Normalbetriebszustand die steuerbare Last (3) auf einen ersten niedrigen Wert eingestellt ist,
- vor einer Lastmodulation zum Senden von Daten der Stromverbrauch der Hauptschaltungskomponente (1) reduziert und gleichzeitig die Last (3) vergrößert wird zur Herstellung eines gleichbleibenden Gesamtstromverbrauchs,
- zur Lastmodulation zum Senden von Daten die steuerbare Last (3) in Abhängigkeit der zu sendenden Daten verringert wird und
- nach dem Senden von Daten der Stromverbrauch der Hauptschaltungskomponente (1) wieder erhöht und die Last auf den ersten Wert verringert wird.

9. Verfahren nach Anspruch 8,
**dadurch gekennzeichnet, daß**
der erste Wert einer Abschaltung der Last (3) entspricht.

## Claims

1. Contactless data storage medium having
- a principal circuit component (1),
- a coupling element (2) and
- a controllable load (3) which is connected in parallel with the principal circuit component (1),
- where the principal circuit component (1) comprises a modulation controller (4) which is able to reduce the controllable load (3) for the purpose of load modulation,
**characterized in that**
a drawn-current controller (5) is provided which is able to reduce the current drawn by the principal circuit component (1) and is able to increase the size of the controllable load (3) for the purpose of producing a constant total drawn current.

2. Contactless data storage medium according to Claim 1,
**characterized in that**
the current drawn by the principal circuit component (1) can be reduced in order to reduce the clock frequency.

3. Contactless data storage medium according to Claim 1 or 2,
**characterized in that**
the current drawn by the principal circuit component (1) is reduced by disconnecting functional units which are temporarily not in use, particularly when data are returned.

4. Contactless data storage medium according to one of Claims 1 to 3,
**characterized in that**
the load (3) is reduced by the modulation controller (4) until a predetermined maximum permissible voltage has been reached on the coupling element (2).

5. Data storage medium according to one of Claims 1 to 4,
**characterized in that**
the controllable load (3) is connected to the connections (LA, LB) of the coupling element (2).

6. Contactless data storage medium according to one of Claims 1 to 4,
**characterized in that**
the controllable load is connected to DC voltage outputs on a rectifier (8).

7. Contactless data storage medium according to one of Claims 1 to 6,
**characterized in that**
a clock detection apparatus (9) having a downstream divider (10) is provided in order to provide a clock frequency for the principal circuit component (1), a tracking synchronization apparatus (11) is connected to the divider (10) for the purpose of adjusting the clock frequency.

8. Method for operating a contactless data storage medium, in which a controllable load (3) is connected in parallel with a principal circuit component (1) and in which data are returned through offloading modulation,
**characterized in that**
- in a normal operating state the controllable load (3) is set to a first low value,
- load modulation for sending data is preceded by reduction of the current drawn by the principal circuit component (1) and simultaneous increase of the size of the load (3) in order to produce a constant total drawn current,
- the purpose of load modulation for sending data is served by reducing the controllable load (3) on the basis of the data which are to be sent, and
- the sending of data is followed by the current drawn by the principal circuit component (1) being increased again and the load being reduced to the first value.

9. Method according to Claim 8,
**characterized in that**
the first value corresponds to disconnection of the load (3).

## Revendications

1. Support de données sans contact comprenant :
- un composant (1) principal de circuit,
- un élément (2) de couplage et
- une charge (3) qui peut être commandée et qui est montée en parallèle au composant (1) principal de circuit,
- dans lequel le composant (1) principal de circuit a une commande (4) de modulation, par laquelle la charge (3), qui peut être commandée, peut être diminuée en vue d'une modulation de la charge,
**caractérisé en ce que**
il est prévu une commande (5) de consommation de courant, par laquelle la consommation de courant du composant (1) principal de circuit peut être diminuée, et pour produire une consommation de courant globale restant la même, la charge (3), qui peut être commandée, peut être augmentée.

2. Support de données sans contact suivant la revendication 1,
**caractérisé en ce que**
la consommation de courant du composant (1) principal de circuit peut être diminuée pour une diminution de la fréquence d'horloge.

3. Support de données sans contact suivant la revendication 1 ou 2,
**caractérisé en ce que**
la diminution de la consommation de courant du composant (1) principal de circuit s'effectue par mise hors circuit de temps en temps, notamment lors du renvoi de données d'unités fonctionnelles inutilisées.

4. Support de données sans contact suivant l'une des revendications 1 à 3,
**caractérisé en ce que**
une décharge (3) s'effectue par la commande (4) de modulation jusqu'à obtention sur l'élément (2) de couplage d'une tension maximum admissible déterminée à l'avance.

5. Support de données sans contact suivant l'une des revendications 1 à 4,
**caractérisé en ce que**
la charge (3) qui peut être commandée est reliée aux bornes (LA, LB) de l'élément (2) de couplage.

6. Support de données sans contact suivant l'une des revendications 1 à 4,
**caractérisé en ce que**
la charge qui peut être commandée est raccordée aux sorties de tension continue d'un redresseur (8).

7. Support de données sans contact suivant l'une des revendications 1 à 6,
**caractérisé en ce que**
il est prévu un dispositif (9) de détection d'horloge ayant un diviseur (10) qui met à disposition une fréquence d'horloge pour le composant (1) principal du circuit, un dispositif (11) de synchronisation à asservissement étant relié au diviseur (10) pour régler la fréquence d'horloge.

8. Procédé pour faire fonctionner un support de données sans contact dans lequel une charge (3) pouvant être commandée est montée en parallèle avec un composant (1) principal de circuit et dans lequel un renvoi de données s'effectue par modulation par décharge,
**caractérisé en ce que**
- on règle, dans l'état normal de fonctionnement, la charge (3) qui peut être commandée à une première valeur basse,
- on réduit, avant une modulation de charge, pour envoyer des données, la consommation de courant du composant (1) principal de circuit et on augmente en même temps la charge (3) pour obtenir une consommation globale de courant qui reste la même,
- pour la modulation de charge pour émettre des données, on diminue la charge (3), qui peut être commandée, en fonction des données à envoyer et
- après l'envoi de données, on augmente à nouveau la consommation de courant du composant (1) principal de circuit et on diminue la charge en la ramenant à la première valeur.

9. Procédé suivant la revendication 8,
**caractérisé en ce que**
la première valeur correspond à une mise hors circuit de la charge (3).
